(19) Europäisches Patentamt
European Patent Office
Office européen des brevets

(11) Veröffentlichungsnummer: **0 019 846**
**A2**

(12) # EUROPÄISCHE PATENTANMELDUNG

(21) Anmeldenummer: **80102823.4**

(22) Anmeldetag: **21.05.80**

(51) Int. Cl.³: **C 14 C 3/18,** C 09 B 39/00, C 09 B 33/00, C 09 B 31/00, D 06 P 3/32

(30) Priorität: **01.06.79 DE 2922482**

(43) Veröffentlichungstag der Anmeldung: **10.12.80 Patentblatt 80/25**

(84) Benannte Vertragsstaaten: **CH DE FR GB IT LI**

(71) Anmelder: **BAYER AG, Zentralbereich Patente, Marken und Lizenzen, D-5090 Leverkusen 1, Bayerwerk (DE)**

(72) Erfinder: **Träubel, Harro, Dr., Dresdener Strasse 14, D-5090 Leverkusen (DE)**
Erfinder: **Westphal, Jochen, Dr., Naegelestrasse 10a, D-4000 Düsseldorf (DE)**
Erfinder: **Zinz, Bruno, Leopold-Gmelin-Strasse 7, D-5000 Köln 80 (DE)**

(54) **Gerbstoffe der Azoreihe, ihre Herstellung und ihre Verwendung zum gleichzeitigen Gerben und Färben von Leder und sie enthaltende Mittel.**

(57) Gerbfarbstoffe der Azoreihe, erhalten durch Kupplung von aromatischen Verbindungen, die mindestens eine Diazogruppe enthalten, mit wasserlöslichen Gerbstoffen, die durch Kondensation von

a) Formaldehyd oder Formaldehyd abgebenden Verbindungen,
b) einem gegebenenfalls sulfonierten Arylether oder gegebenenfalls sulfoniertem Naphthalin oder gegebenenfalls sulfonierten Terphenyl oder einem gegebenenfalls sulfonierten Phenol-Harnstoff-Gemisch oder deren Gemischen untereinander oder mit einem Dihydroxydiarylsulfon und
c) einem Sulfierungsmittel für den Fall, daß die unter b) genannten Verbindungen sulfonsäuregruppenfrei sind,

hergestellt wurden, und gegebenenfalls anschließende Umsetzung mit Schwermetallsalzen, sind zum gleichzeitigen Gerben und Färben geeignet.

0019846



BAYER AKTIENGESELLSCHAFT 5090 Leverkusen, Bayerwerk
Zentralbereich
Patente, Marken und Lizenzen Mi/kl

# Gerbstoffe der Azoreihe, ihre Herstellung und ihre Verwendung zum gleichzeitigen Gerben und Färben von Leder und sie enthaltende Mittel

Gegenstand der Erfindung sind Gerbstoffe der Azoreihe, die durch Kupplung von aromatischen Verbindungen, die mindestens eine Diazogruppe enthalten, mit wasserlöslichen Gerbstoffen, die durch Kondensation von

a) Formaldehyd oder Formaldehyd abgebenden Verbindungen,
b) einem gegebenenfalls sulfonierten Arylether oder gegebenenfalls sulfoniertem Naphthalin oder gegebenenfalls sulfoniertem Terphenyl oder einem gegebenenfalls sulfonierten Phenol-Harnstoff-Gemisch und

c) einem Sulfierungsmittel für den Fall, daß die unter b) genannten Verbindungen sulfonsäuregruppenfrei sind,

hergestellt werden, und gegebenenfalls anschließende Umsetzung mit Schwermetallsalzen erhalten werden, sowie ihre Verwendung zu gleichzeitigen Gerben und Färben von Leder und ihre Herstellung. Vorzugsweise wird mit Di- oder Tetrazoverbindungen gekuppelt. Sie können zur aromatisch-isocyclischen und aromatischheterocyclischen Reihe gehören. Geeignete Verbindungen sind beispielsweise solche der Benzol-, Naphthalin-, Thiazol-, Benzthiazol-,Thiadiazol-, Triazol-, Pyrazol- oder Thiophenreihe.

Sie können durch Sulfo- oder Carboxyl-Gruppen und/ oder durch nichtionische Reste wie Halogen, insbesondere Chlor oder Brom, Nitro, Cyan, Trifluormethyl, $C_1$-$C_4$-Alkyl, $C_1$-$C_4$-Alkoxy, Hydroxy, Aryloxy, Arylazo, $C_1$-$C_4$-Alkylsulfonyl, Arylsulfonyl, gegebenenfalls durch $C_1$-$C_4$-Alkyl, Aryl oder Aralkyl substituiertes Amino, Sulfonamido oder Carbonamido, Acylamino, insbesondere Benzoylamino oder Acetylamino substituiert sein. Aryl steht dabei vorzugsweise für Phenyl und Aralkyl für Benzyl.

Geeignete Substituenten in der o-Stellung zur Diazogruppe, z.B. Carboxy oder Hydroxy, können bei der Bildung von Metallkomplexen teilnehmen.

Beispiele für Diazokomponenten sind z.B. in GB-PS 14 59 522, DE-OS 25 15 662, DE-OS 25 26 172 und DE-OS 26 40 764 beschrieben.

Bei den als Ausgangsstoffe verwendeten wasserlöslichen Gerbstoffen, die aus den Verbindungen a, b und gegebenenfalls c hergestellt werden, handelt es sich um bekannte Hilfs-, Austausch- oder Vollgerbstoffe.

Geeignete Gerbstoffe aus Formaldehyd und sulfonierten Arylethern und gegebenenfalls anderen der unter b) genannten Komponenten sind beispielsweise aus DE-PS 617 015, DE-OS 19 61 369 und US-PS 23 15 951 bekannt. Geeignete Gerbstoffe aus Formaldehyd und sulfoniertem Terphenyl und gegebenenfalls anderen der unter b) genannten Komponenten werden in DE-OS 18 06 536 und DE-OS 28 34 121 beschrieben.

Aus CH-PS 446 599 und DE-AS 11 13 457 sind geeignete Kondensationsprodukte aus Formaldehyd, Phenolsulfonsäuren, Harnstoff und Phenolen bekannt. In DE-PS 611 671 werden geeignete Kondensationsprodukte aus Formaldehyd, aromatischen Sulfonsäuren wie Naphthalinsulfonsäuren und 4,4'-Dihydroxydiphenylsulfon beschrieben.

Bevorzugt zu verwendende Gerbstoffe sind Reaktionsprodukte aus

I) 4,4'-Dihydroxydiphenylsulfon, Arylethersulfonsäuren und Formaldehyd. Als Arylethersulfonsäuren seien beispielsweise gegebenenfalls durch Hydroxy, Methoxy, Ethoxy, Methyl, Ethyl oder Acetyl substituierte Diphenyl-, Methyl-phenyl- oder Ethyl-phenyl-ether genannt. Das Molverhältnis liegt insbesondere bei 1:0,2-4:0,8-4,2;

II) Terphenylsulfonsäuren und Formaldehyd und gegebenenfalls Naphthalinsulfonsäuren und/oder 4,4'-Dihydroxydiphenylsulfon. Das Molverhältnis von Terphenylsulfonsäuren und Formaldehyd liegt insbesondere bei 1:0,4-1, und im Fall der 4 Komponenten bei 1:0,6-5,5:0,2-2:0,3-3,5.

III) Phenolsulfonsäuren, Harnstoff, Formaldehyd und Phenolen. Als Phenolsulfonsäuren seien Phenol-, Kresol- und Xylenolsulfonsäuren genannt. Als Phenole, Phenol Kresol, Xylenol und Bisphenole wie 4,4'-Dihydroxydiphenyldimethylmethan und 4,4'-Dihydroxydiphenylsulfon. Bevorzugte Produkte werden im Mehrstufenverfahren erhalten, bei dem zunächst Phenolsulfonsäuren, Harnstoff und Formaldehyd im Molverhältnis 1:0,8-1,5:1,2-1,6 und dann pro Mol 0,5-1,0 Mol Formaldehyd und Phenol umgesetzt werden.

Als Formaldehyd-abgebende Verbindungen kommen beispielsweise Paraformaldehyd und Hexamethylentetramin in Betracht.

Das molare Verhältnis der Gerbstoffe zu den Di- oder Tetrazoverbindungen kann in weiten Grenzen schwanken. Bevorzugt wird ein Verhältnis von 1:0,1-4. Dabei wird wiederum ein Molverhältnis von 1:1-4 für Diazoverbindungen und von 1:0,5-2 für Tetraazoverbindungen bevorzugt.

Die Wasserlöslichkeit der neuen Gerbfarbstoffe liegt vorzugsweise bei mindestens 10 g/l, und insbesondere bei 10 - 100 g/l.

Besonders hervorzuhebende Gerbfarbstoffe besitzen die Formel

$$(R\text{-}D\text{-}N{=}N)_{1-4}\text{-}X \qquad (I)$$

worin

D den zweiwertigen Rest einer Diazokomponente,

X den 1 - 4-wertigen Rest einer Kupplungskomponente, hergestellt durch Umsetzung von

4,4'-Dihydroxydiphenylsulfon, einem gegebenenfalls durch Hydroxy, Methoxy, Ethoxy, Methyl, Ethyl oder Acetyl substituiertem Diphenyl-, Methyl-phenyl- oder Ethyl-phenyl-ether und Formaldehyd oder

einer Terphenylsulfonsäure der Formel

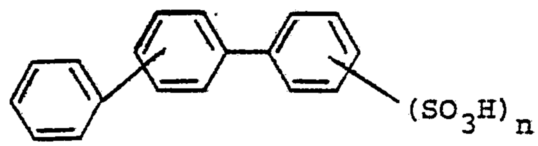

n = 1 - 4

und Formaldehyd und gegebenenfalls einer Naphthalinsulfonsäure und 4,4'-Dihydroxydiphenylsulfon, oder

einer Phenol-, Kresol- oder Xylenolsulfonsäure, Harnstoff, Formaldehyd und Phenol, Kresol, Xylenol, 4,4'-Dihydroxydiphenyldimethylmethan oder 4,4'-Dihydroxydiphenylsulfon,

R Wasserstoff oder einen Rest der Formel

X-N=N- oder
A-N=N-

A den einwertigen Rest einer Diazokomponente, die gleich oder verschieden von D-H ist.

Beispiele für besonders geeignete diazotierbare Amine der Formeln $H-D-NH_2$ oder $H_2N-D-NH_2$ sind:

Anilin,
2-, 3- oder 4-Chlor-anilin,
2,3-, 2,4-, 2,5-, 2,6- oder 3,4-Dichlor-anilin,
2,4,5- oder 2,4,6-Trichloranilin,
2-, 3- oder 4-Nitro-anilin,
4-Chlor-2-nitro-anilin,
2-Chlor-4-nitro-anilin,
2,6-Dichlor-4-nitro-anilin,
2,4-Dinitro-anilin,
o-, m- oder p-Toluidin,
3- oder 5-Chlor-2-methyl-anilin,
5-Nitro-2-methyl-anilin,
2-Chlor-5-methyl-anilin,
3-Chlor-4-methyl-anilin,
2- oder 3-Nitro-4-methyl-anilin,
2,4-Dimethyl-5-nitro-anilin,
1-Amino-naphthalin,
4-Nitro-2-sulfo-anilin,
2-, 3- oder 4-Sulfo-anilin,
2,4-oder 2,5-Disulfo-anilin,
2-Methoxy - 5-Sulfo-anilin,
4(4'-Sulfophenylazo)-anilin,
2,4'-Disulfo-4-phenylazo-anilin,
4-Nitro-2-sulfo-anilin,
2-, 3-, 4-, 5-, 6-, 7- oder 8-Sulfonaphthyl(1)amin,
2,4-, 3,6-, 3,7-, 3,8-, 4,6-, 4,7-, 4,8-, 5,7- oder
6,8-Disulfonaphthyl(1)amin,
2,4,6-, 2,4,7-, 3,6,8- oder 4,6,8-Trisulfonaphthyl(1)amin,
1-, 5-, 6-, 7- oder 8-Sulfonaphthyl(2)amin,
3,6-, 3,7-, 4,8-, 5,7- oder 6,8-Disulfonaphthyl(2)amin,
oder 1,5,7-, 3,6,8- oder 4,6,8-Trisulfonaphthyl(2)amin,
1-Amin-2-hydroxy-6-nitro-naphthalin-4-sulfonsäure.

Die Kupplung wird nach bekannten Methoden durchgeführt, wie sie z.B. in den DDR-PS 21 148, 22 375 und 22 473, in der DE-AS 1 006 577 und in den DE-OS 2 006 170, 2 203 614, 2 302 716, 2 519 657 und 2 652 215 beschrieben sind. Hierzu kommen insbesondere 2 Verfahren in Betracht:

1. Der in Wasser gelöste Gerbstoff wird alkalisch gestellt, z.B. mit Na-bicarbonat. Zu der Lösung wird in der Kälte die diazotierte Aminlösung gegeben. Der Gerbfarbstoff wird durch Aussalzen isoliert.

2. In einem Eintopfverfahren wird die saure Gerbstofflösung zunächst mit dem Amin zusammengegeben, anschließend in der Kälte mit Nitrit versetzt und allmählich alkalisch gestellt.

Die Metallkomplex-Bildung mit z.B. Cu-, Ni-, Cr-, Co- und Fe-Ionen wird ebenfalls nach bekannten Verfahren, u.a. nach den Verfahren der DE-OS 2 006 170 und DE-OS 2 652 215, durchgeführt.

Die erfindungsgemäßen farbigen Gerbstoffe können an allen Stellen der Lederherstellung eingesetzt werden,

bei denen natürliche oder synthetische Gerbstoffe benutzt bzw. bei denen saure Farbstoffe eingesetzt werden.

Damit ergibt sich, daß die Höchstmenge an Produkten durch die Menge sinnvollerweise limitiert ist, wie Gerbstoff eingesetzt werden würde.

Für Vegetabilgerbungen sind demnach 50 % (auf Blößengewicht), für Nachgerbungen von chromgegerbten Ledern 25 % (auf Falzgewicht) obere Mengenbegrenzungen. Im allgemeinen wird man aber nur einen kleinen Teil der anzuwendenden Gerbstoffe durch Azogerbstoffe ersetzen.

In Vegetabilgerbungen sind 0,1-10 % und vorzugsweise 0,5-5 % (bezogen auf Blößengewicht) Azogerbstoffe einsetzbar. Der Rest der notwenigen Gerbstoffe wird mit synthetischen oder vegetabilischen Gerbstoffen durchgeführt. Bei Nachgerbungen und/oder Färbungen setzt man 0,1-10 % Azogerbstoff (bezogen auf Falzgewicht) oder vorzugsweise 0,5-5 % Azogerbstoff ein.

Vorzugsweise werden die neuen Gerbfarbstoffe zur Nachgerbung von chromgegerbtem Leder verwendet.

Mit den neuen Gerbfarbstoffen wird ein ausgezeichneter Gerbeffekt und eine hohe Egalität der Färbungen erreicht. Die Färbungen zeichnen sich außerdem durch eine gute Lichtechtheit, Farbintensität und Auswaschechtheit aus.

Herstellung der Farbstoffe

Beispiel 1

In 150 g Wasser und 48 g Salzsäure werden 13,8 g 4-Nitroanilin (0,1 Mol) gelöst, und in der Kälte werden 6,9 g Natriumnitrit (0,1 Mol), das in 20 ml Wasser gelöst war, langsam zugegeben.

58 g eines Kondensationsproduktes (0,1 Mol), das gemäß der DE-PS 611 671, Beispiel 1, hergestellt war, werden mit 25 g Wasser verdünnt und mit Na-bicarbonat alkalisch gestellt.

In dieses Kondensationsprodukt läßt man bei etwa 5°C die Diazoniumsalzlösung einlaufen, stellt nach 1 - 2 Stunden Rühren auf pH 7,8 und saugt den entstandenen gelbbraunen Niederschlag nach Aussalzen mit Glaubersalz ab.

Beispiel 2

a) 116 g des Kondensationsproduktes aus Beispiel 1, das 50 %ig in Wasser vorliegt (0,1 Mol), werden mit Wasser verdünnt und mit 50 g Natriumbicarbonat alkalisch gestellt.

b) 10 g 2,4-Diamino-phenol (0,05 Mol) werden in 330 g Wasser gelöst und mit 58 g eines sauren Naphthalinsulfonsäure-Formaldehyd-Kondensates (Säurezahl 150) sauergestellt. Das Naphthalinsulfonsäure-Formaldehyd-Kondensat wurde durch Kondensation von 2 Mol Naphthalinsulfonsäure mit 1,2 Mol Formaldehyd in bekannter Weise erhalten.

6,9 g Natriumnitrit (0,1 Mol) und 27,8 g Eisen-IIsulfat (0,1 Mol) werden in 80 g Wasser gelöst und bei 0 - 3°C der Lösung b allmählich zugegeben. Lösung b wird anschließend in Lösung a eingetragen und nach mehreren Stunden auf pH 7,5 gestellt.

Es entsteht eine tief blauviolette Lösung.

Beispiel 3

58 g des Kondensationsproduktes aus Beispiel 1 (0,1 Mol) werden in 420 g Wasser gelöst. 10 g 2,4-Diaminotoluol (0,05 Mol) und 6,9 g Natriumnitrit (0,1 Mol) werden bei 0 - 5°C zugefügt. Nach 10 Minuten Rühren erhöhte man mit Trimethylamin den pH-Wert auf 7,5. Es entsteht eine hellbraune Lösung.

Beispiel 4

29 g eines Kondensationsproduktes, das analog Beispiel 1 aus Dioxy-diphenylsulfon-Formaldehyd-Naphthalinsulfonsäure (im Mol-Verhältnis 0,95:1,2:1) hergestellt worden war, (0,06 Mol) werden in 100 g Wasser gelöst und 6,98 g 4-Nitroanilin zugesetzt. Bei 0 - 5°C wird mit 3,45 g Natriumnitrit, das in 30 g Wasser gelöst wird, diazotiert. Anschließend werden 29 g des Kondensationsproduktes aus Beispiel 1 in 100g Wasser gelöst zugegeben. Mit 70 g Natriumbicarbonat wird auf pH 7,5 gestellt. Man erhält eine braune Lösung.

Beispiel 5

12 g eines Kondensationsproduktes aus Dioxydiphenylsulfon, Naphthalinsulfonsäure, Ditolylethersulfonsäure und Formaldehyd (Mol-Verhältnis 1:0,2:0,8:1,1) werden in 50 g Wasser löst und mit 2,7 g Natriumbicarbonat alkalisch gestellt (pH 7 - 8). In diese Lösung werden 5 g eines handelsüblichen, mit einem Naphthalinsulfonsäure-Kondensat stabilisierten Diazoniumsalzes aus 4-Nitro-anilin in 20 g Wasser eingetragen. Es bildet sich ein gelbbrauner Azofarbstoff.

Beispiel 6

Nach der US-PS 2 315 951, Beispiel 1, wird ein Kondensationsprodukt aus 2 Mol Ditolylethersulfonsäure und 1,2 Mol Formaldehyd hergestellt. Das entstandene Kondensationsprodukt wird analog Beispiel 2 b eingesetzt.

Beispiel 7

0,1 Mol eines gemäß der FR-PS 1 480 115, Beispiel 1, hergestellten Kondensationsproduktes wird mit 0,05 Mol diazotiertem 5-Nitro-2-toluidin in der 2-fachen Wassermenge versetzt. Nach durchgeführter Kupplung wird der entstandene orange-farbene Azo-Gerbstoff durch Aussalzen isoliert.

Der Gerbstoff färbt chromgare Leder mit einem rotstichtigen brillanten Gelb. Er hat eine Lichtechtheit von 3 - 4.

Beispiel 8

Analog der DE-OS 1 961 369, Beispiel 6, wird aus Ditolylethersulfonsäure (1 Mol), Dioxydiphenylsulfon (1 Mol) und Formaldehyd (1,1 Mol) ein lichtechter Austauschgerbstoff hergestellt.

60 g einer 45 %igen Lösung dieses Kondensationsproduktes (0,5 Mol) werden in 200 g Eiswasser mit 70 g 20 %iger Natronlauge neutralisiert, und schließlich werden noch 325 g Natriumbicarbonat zugesetzt.

208 g technische H-Säure werden in 400 g Wasser zusammen mit 29 g Salzsäure (techn.) aufgeschlämmt. 34,5 g

Natriumnitrit (0,5 Mol) und 140 g Eiswasser zugesetzt. Nach 2 Stunden Rühren wird mit Amidosulfonsäure überschüssiges Nitrit zerstört und mit der Lösung des Kondensationsproduktes unter Rühren vereinigt. Der entstehende rotstichige tiefblaue Farbstoff wird durch Eindampfen auf der Walze isoliert.

Beispiel 9

650 g Kondensationsprodukt aus Beispiel 8 gekuppelt mit 96 g diazotierter Sulfanilsäure ergibt einen gelbbraunen Farbstoff, der 14 %ig in der Reaktionslösung gelöst ist.

595 g dieser Lösung werden mit 25 g Kupfersulfat, das in 275 g konz., techn. Ammoniakwasser gelöst war, versetzt und 2 Stunden am Rückfluß gekocht. Es entsteht ein dunkelbrauner Farbstoff.

Beispiel 10

a) 0,1 Mol der Kondensationsproduktes aus Beispiel 1 werden in 150 ml Wasser mit 0,05 Mol Naphthalinsulfonsäure gelöst. In dieser Lösung werden 0,05 Mol 4-Nitroanilin suspendiert, gekühlt durch Eintragen von Eis, 0,01 Mol Salzsäure und 0,05 Mol Natriumnitrit zugefügt und der pH allmählich mit Soda auf 7 gestellt.

b) 0,1 Mol Kupfersulfat werden mit konzentriertem Ammoniak in Lösung gebracht.

In die auf pH 7 gestellte Lösung a) wird Lösung b) eingetragen. Nach 2 Stunden wird die entstehende braune Suspension so lange am Rückfluß gekocht, bis kein Geruch nach Ammoniak mehr zu bemerken ist. Der entstehende dunkelbraune Farbstoff wird durch Zugabe von Glaubersalz gefällt und abfiltriert.

Beispiel 11

0,22 Mol Kondensationsprodukt aus Beispiel 1 wurden in 100 ml Wasser gelöst und 0,05 Mol Chrom-III-sulfat zugegeben. 0,15 Mol 2-Hydroxy-nitroanilin wurden der Lösung zugesetzt.

Nach Eintragen von Eis und Abkühlen auf 0°C wurden 0,15 Mol Natriumnitrit zugesetzt und mit Soda der pH unter Rühren auf pH 9 allmählich angehoben. Der entstehende braune Farbstoff wurde unter Salzzusatz vollends ausgefällt und durch Walzentrocknung isoliert.

Beispiel 13

Analog Beispiel 12 wurde aus 0,1 Mol Kondensationsprodukt von Beispiel 1, 0,05 Mol H-Säure, 0,05 Mol 4,4'-Diamino-diphenylamin, 0,1 Mol Kupfersulfat und 0,1 Mol Kaliumnitrit ein dunkelbrauner Farbstoff hergestellt.

T a b e l l e 1

| Beispiel | Kondensationsprodukt aus | Mol | Zusatz von | Mol | Amin bzw. Diazonium-Salz | Mol | Natriumnitrit Mol | Farbton |
|---|---|---|---|---|---|---|---|---|
| 13 | Beispiel 1 | 0,02 | | | 4-Nitro-phenyl-diazonium-naphthalinsulfonat | 0,01 | | gelb |
| 14 | Beispiel 1 | 0,12 | | | " | 0,06 | | gelb |
| 15 | Beispiel 1 | 0,1 | | | 4-Nitroanilin | 0,1 | 0,1 | gelb |
| 16 | Beispiel 1 | 0,25 | H-Säure | 0,125 | " | 0,125 | 0,25 | violett |
| 17 | Beispiel 1 | 0,125 | | | 4,4-Diaminodiphenylamin | 0,0625 | 0,063 | hellbraun |
| 18 | Beispiel 1 | 0,2 | H-Säure<br>Ethyl-alpha-naphthylamin | 0,1<br>0,04 | 4-Nitroanilin<br>2,4-Diaminoanisol | 0,2<br>0,16 | 0,4 | violett |
| 19 | Beispiel 1 | 0,2 | C.I. Acid Black 20 470 | 0,10 | 2,4-Diaminoanisol | 0,1 | 0,1 | dunkelbraun |
| 20 | Beispiel 1 | 0,1 | | | 4,4'-Diaminodiphenylamin | 0,05 | 0,1 | hellbraun |
| 21 | Beispiel 1 | 0,10 | H-Säure | 0,05 | 4,4'-Diaminodiphenylamin | 0,05 | 0,05 | mittelblau |

T a b e l l e 1 (Fortsetzung)

| Beispiel | Kondensations-produkt aus | Mol | Zusatz von | Mol | Amin bzw. Diazonium-salz | Mol | Natrium-nitrit Mol | Farbton |
|---|---|---|---|---|---|---|---|---|
| 22 | Beispiel 1 | 0,10 | | | 5-Amino-1-hydroxy-naphthalin | 0,05 | 0,05 | grau |
| 23 | Beispiel 1 | 0,10 | | | 4,4'-Diaminodiphe-nylether | 0,05 | 0,1 | hellgelb |
| 24 | Beispiel 1 | 0,10 | | | 2,4-Diaminoanisol | 0,05 | 0,10 | dunkelbraun |
| 25 | Beispiel 1 | 0,10 | H-Säure | 0,05 | 4,4'-Diaminodiphe-nylamin | 0,05 | 0,10 | dunkelbraun |
| 26 | Beispiel 1 | 0,10 | | | 2,4-Diaminophenol | 0,05 | 0,10 | hellbraun |
| 27 | Beispiel 1 | 0,10 | | | 5-Nitro-2-toluidin | 0,05 | 0,05 | gelbbraun |
| 28 | Beispiel 1 | 0,10 | | | Ethylenglykol-mono-4-aminophenylether | 0,05 | 0,05 | oker |
| 29 | Beispiel 1 | 0,05 | 4-Nitroanilin | 0,05 | Na-bicarbonat + Produkt nach Bsp. 1 zugesetzt nach Diazotieren | 0,05 | 0,05 | orange |
| 30 | Beispiel 8 | 0,05 | 4-Nitroanilin | | Produkt nach Bsp. 1 | 0,05 | 0,05 | zitrongelb |
| 31 | Beispiel 8 | 0,10 | 1,3-Dihydroxy-benzol | 0,05 | 4-Nitroanilin | 0,05 | 0,05 | brillantorange |

T a b e l l e 1 (Fortsetzung)

| Beispiel | Kondensationsprodukt aus | Mol | Zusatz von | Mol | Amin bzw. Diazoniumsalz | Mol | Natriumnitrit Mol | Farbton |
|---|---|---|---|---|---|---|---|---|
| 32 | Beispiel 8 | 1,0 | H-Säure | 0,32 | 4,4'-Diaminodiphenylamin | 0,50 | 0,50 | blau |
| 33 | Beispiel 8 | 2,20 | | | 4-Nitroanilin | 1,0 | 1,0 | gelbbraun |
| 34 | Beispiel 8 | 0,10 | | | 2,2-Bis-(4-aminophenyl)-propan | 0,05 | 0,10 | gelb |
| 35 | Beispiel 8 | 0,10 | | | 1-Amino-2-hydroxynaphthalin | 0,05 | | |
| 36 | Beispiel 8 | 0,10 | Eisen-II-sulfat | 0,02 | 5-Nitro-3-amino-4-hydroxy-toluol | 0,05 | 0,05 | gelbbraun |
| 37 | Beispiel 8 | 0,10 | Kupfer-II-sulfat | 0,02 | 5-Nitro-3-amino-4-hydroxy-toluol | 0,05 | 0,05 | gelbbraun |
| 38 | Beispiel 8 | 0,2 | | | 2-Aminobenzolsulfosäure | 0,2 | 0,2 | gelbbraun |
| 39 | Beispiel 8 | 0,4 | 4-Aminobenzolsulfosäure | 0,2 | 2,4-Diaminophenol | 0,1 | 0,4 | dunkelbraun |

Anwendung

Beispiel 1 A

Kalbsblöße wurde mit 400 % Wasser und 25 % der in Beispiel 1 hergestellten Substanz versetzt und über nacht am Schüttelkreuz gegerbt.

Beispiel 2 A

Der Versuch wurde mit dem nicht gekuppelten Kondensationsprodukt aus Beispiel 1 korrespondierend wiederholt. Das mit dem Farb-Gerbstoff gegerbte Leder hatte die gleiche Fülle und Weichheit wie das mit dem nicht diazotierten Gerbstoff gegerbte Leder. Ferner weist der gekuppelte Gerbstoff die gleiche Bindungsfähigkeit und die gleiche Lichtechtheit auf wie der nicht gekuppelte.

Beispiel 3 A

Eine chromgegerbte Hälfte (mit 2,2 % $Cr_2O_3$) (sog. wet blue) wurde in 50 % Flotte bei pH 4,3 mit 5 % der Substanz aus Beispiel 1 versetzt und 2 Stunden in einem Gerbfaß nachgegerbt.

Die Gerbflotte war sehr gut ausgezehrt. Nach dem Lickern mit 5 % eines Fettungsmittelgemisches auf Basis Tran/Spermöl wurde anschließend getrocknet, konditioniert und gestollt.

Beispiel 4 A

Eine Vergleichshälfte war analog mit dem nicht gekuppelten Gerbstoff behandelt und mit dem handelsüblichen Farbstoff C.I. ACID BROWN 34 905 gefärbt worden.

Ein Vergleich der hellbraunen Hälfte aus Versuch 3 A und 4 A ergab keine Unterschiede im Hinblick auf Weichheit und Narbenfestigkeit. Die Egalität der Färbung aus Versuch 3 A war erheblich besser als diejenige aus Versuch 4 A.

Beispiel 5 A

Zwei korrespondierende in üblicher Weise für Bodenleder vorbereitete alkalischen Blößenstücke werden auf der Walkmaschine mit 4 % (bezogen auf Blößengewicht) eines nachstehend beschriebenen pulverförmigen Gemisches zum Sauerstellen, 0,1 % Natriummetabisulfit und 2 % Ameisensäure 85 %ig, 3 Stunden gewalkt.

Das pulverförmige Sauerstellmittel ist ein Gemisch aus 50 Gew.-Teilen Natriumbisulfat, 30 Gew.-Teilen Ammoniumsulfat und 20 Gew.-Teilen Ammoniumsalzen von Naphthalindi- und Naphthalintrisulfonsäuren. Das eine sauergestellte Blößenstück wird mit 4 % eines synthetischen Hilfsgerbstoffes und 4 % des Azogerbstoffes nach Beispiel 8, das andere mit 8 % eines synthetischen Hilfsgerbstoffs 4 Stunden weitergewalkt.

Die vom Vorgerbstoff und Azogerbstoff bzw. vom Vorgerbstoff allein volständig durchdrungenen Blößen werden anschließend 10 Minuten mit Wasser von 30°C gespült.

Die vorgegerbten und gespülten korrespondierenden Leder werden nach Ablassen der Spülflotte mit 10 % Wasser und 20 % eines pulverförmigen sulfitierten Quebrachoextraktes 14 Stunden auf der Walkmaschine ausgegerbt.

Es resultiert bei Einsatz von 8 % synthetischem Hilfsgerbstoff ein gleichmäßig durchgegerbtes, im Schnitt und auf der Oberfläche hellbraunes, glattes Bodenleder, bei Einsatz von 4 % synthetischem Hilfsgerbstoff und 4 % Azogerbstoff nach Beispiel 8 ein ebenfalls gleichmäßig durchgegerbtes, aber im Schnitt und auf der Oberfläche blaues, glattes Bodenleder.

Beispiel 6 A

Zwei korrespondierende, in üblicher Weise konditionierte und vorgegerbte Blößenstücke wurden auf der Walkmaschine vergleichend wie folgt ausgegerbt:

Das eine Stück wurde mit 16 % Reingerbstoff eines pulverförmigen sulfitierten Quebrachoextraktes und 4 % Azogerbstoff 39 der Tabelle 1, das andere Stück wurde mit 20 % Reingerbstoff eines pulverförmigen

sulfitierten Quebrachoextraktes ausgegerbt.

Es resultierte bei Ausgerbung mit 16 % Reingerbstoff Quebracho und 4 % des Azogerbstoffes 39 der Tabelle ein gleichmäßig durchgegerbtes und durchgefärbtes braunes Bodenleder, bei Ausgerbung mit 20 % Reingerbstoff Quebracho ein gleichmäßig durchgegerbtes hellbraunes Bodenleder.

Patentansprüche

1. Gerbfarbstoffe der Azoreihe, erhalten durch Kupplung von aromatischen Verbindungen, die mindestens eine Diazogruppe enthalten, mit wasserlöslichen Gerbstoffen, die durch Kondensation von

   a) Formaldehyd oder Formaldehyd abgebenden Verbindungen,

   b) einem gegebenenfalls sulfoniertem Arylether oder gegebenenfalls sulfoniertem Naphthalin oder gegebenenfalls sulfoniertem Terphenyl oder einem gegebenenfalls sulfoniertem Phenol-Harnstoff-Gemisch oder deren Gemischen untereinander oder mit einem Dihydroxydiarylsulfon und

   c) einem Sulfierungsmittel für den Fall, daß die unter b) genannten Verbindungen sulfonsäuregruppenfrei sind,

   hergestellt wurden, und gegebenenfalls anschließende Umsetzung mit Schwermetallsalzen.

2. Gerbfarbstoffe nach Anspruch 1, erhalten durch Kupplung von diazotierten Mono- oder Diaminen der Benzol-, Naphthalin-, Thiazol-, Benzthiazol, Thiadiazol-, Triazol-, Pyrazol- oder Thiophenreihe.

3. Gerbfarbstoffe nach Anspruch 2, erhalten aus wasserlöslichen Gerbstoffen, die durch Kondensation von

   4,4'-Dihydroxydiphenylsulfon, Arylethersulfonsäuren und Formaldehyd oder

   Terphenylsulfonsäuren und Formaldehyd und gegebenenfalls Naphthalinsulfonsäuren und/oder 4,4'-Dihydroxydiphenylsulfon oder

   Phenolsulfonsäure, Harnstoff, Formaldehyd und Phenolen

   hergestellt wurden.

4. Gerbfarbstoffe nach Anspruch 1, erhalten durch Kupplung von Diazokomponente und Kupplungskomponente im Molverhältnis 1-4:1.

5. Gerbfarbstoffe nach Anspruch 1 der Formel

$$(R - D - N = N)_{1-4}-X$$

worin

D den zweiwertigen Rest einer Diazokomponente,

X den 1 - 4-wertigen Rest einer Kupplungskomponente, hergestellt durch Umsetzung von

4,4'-Dihydroxydiphenylsulfon, einem gegebenenfalls durch Hydroxy, Methoxy, Ethoxy, Methyl, Ethyl oder Acetyl substituierten Diphenyl-, Methyl-phenyl- oder Ethyl-phenyl-ether und Formaldehyd oder

einer Terphenylsulfonsäure der Formel

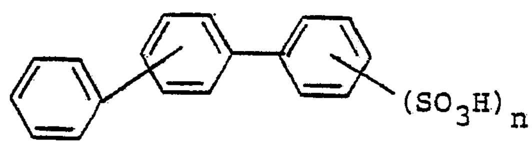

n = 1 - 4

und Formaldehyd und gegebenenfalls einer Naphthalinsulfonsäure und 4,4'-Dihydroxydiphenylsulfon oder

einer Phenol-, Kresol- oder Xylenolsulfonsäure, Harnstoff, Formaldehyd und Phenol, Kresol, Xylenol, 4,4'-Dihydroxydiphenyldimethylmethan oder 4,4'-Dihydroxydiphenylsulfon,

R Wasserstoff oder einen Rest der Formel

X-N=N- oder
A-N=N-

A den einwertigen Rest einer Diazokomponente, die gleich oder verschieden von D-H ist.

6. Verfahren zur Herstellung von Gerbfarbstoffen nach Anspruch 1, dadurch gekennzeichnet, daß man aromatische Verbindungen mit mindestens einer Aminogruppe diazotiert und mit einer Kupplungskomponente, die durch Kondensation von

a) Formaldehyd oder Formaldehyd-abgebenden Verbindungen,

b) einem gegebenenfalls sulfonierten Arylether oder gegebenenfalls sulfoniertem Naphthalin oder gegebenenfalls sulfoniertem Terphenyl oder einem gegebenenfalls sulfoniertem Phenol-Harnstoff-Gemisch oder deren Gemischen untereinander oder mit einem Dihydroxydiarylsulfon und

c) einem Sulfierungsmittel für den Fall, daß die unter b) genannten Verbindungen sulfonsäuregruppenfrei sind,

hergestellt wurde, kuppelt und gegebenenfalls anschließend mit Schwermetallsalzen umsetzt.

7. Verfahren zum gleichzeitigen Gerben und Färben von Leder, dadurch gekennzeichnet, daß man Gerbfarbstoffe des Anspruchs 1 verwendet.

8. Mittel zum gleichzeitigen Gerben und Färben von Leder, die Gerbfarbstoffe des Anspruchs 1 enthalten.